# EUROPÄISCHE PATENTSCHRIFT

(11) **EP 1 708 607 B1**
(45) Veröffentlichungstag und Bekanntmachung des Hinweises auf die Patenterteilung: **28.05.2008**
(21) Anmeldenummer: 05701015.9
(22) Anmeldetag: 18.01.2005
(51) Int. Cl.: A47L 15/48, A47L 15/24

(54) **GESCHIRRSPÜLAUTOMAT MIT REGELBARER WÄRMERÜCKGEWINNUNG**
DISHWASHER WITH CONTROLLABLE HEAT REGENERATION
LAVE-VAISSELLE A RECUPERATION DE CHALEUR REGULABLE

(30) Priorität: 26.01.2004 DE 102004003797
(43) Veröffentlichungstag der Anmeldung: 11.10.2006
(73) Patentinhaber: MEIKO Maschinenbau GmbH & Co. KG, 77652 Offenburg (DE)
(72) Erfinder: SCHERINGER, Stefan, 77654 Offenburg (DE); GAUS, Bruno, 77654 Offenburg (DE); PEUKERT, Thomas, DE 77704 Oberkirch (DE); WIEGAND, Ingo, 77830 Bühlertal (DE); STREB, Michael, 76473 Iffezheim (DE)
(74) Vertreter: Hörschler, Wolfram Johannes
(86) Internationale Anmeldenummer: PCT/EP2005/000446
(87) Internationale Veröffentlichungsnummer: WO 2005/070276

(56) Entgegenhaltungen:
- DE-A1- 4 310 189
- DE-U- 1 832 502
- FR-A- 594 094
- FR-A- 2 059 693

## Beschreibung

### Technisches Gebiet

Geschirrspülautomaten, insbesondere solche, die gewerblich anwendbar sind, weisen häufig eine Anordnung zur Nutzung des Energieinhaltes der Abluft auf und können ferner mit einer das Spülgut transportierenden Transporteinrichtung ausgestattet sein. Bei diesen Geschirrspülautomaten durchläuft das Geschirr auf der Transporteinrichtung im Transportband oder speziell auf diesen angeordneten Körben, die verschiedenen Behandlungszonen innerhalb des Geschirrspülautomaten. Derartige Geschirrspülautomaten weisen eine oder mehrere Spül- oder Vorspülzonen auf, in denen das Spülgut gereinigt und desinfiziert wird. Ferner sind eine oder mehrere Pumpen- bzw. Frischwasserklarspülzonen vorgesehen, in denen das Spülgut von Schmutzresten und Spülsalz befreit wird sowie eine oder mehrere Trockenzonen, in denen das Spülgut abgetrocknet wird. Solchen Geschirrspülautomaten sind ferner eine oder mehrere Einrichtungen zur Wärmerückgewinnung zugeordnet, in welchen aus dem Innenraum des Geschirrspülautomaten abgesaugte Luft über einen Kondensator geführt und dort entfeuchtet wird. Die Kondensationswärme wird dabei zum Beispiel an das Frischwasser, welches dem Geschirrspülautomaten zufließt, abgegeben.

### Stand der Technik

Geschirrspülautomaten mit Transporteinrichtung (siehe z.B. DE 4 310 189 A1) d.h. Durchlauf-Geschirrspülautomaten, werden in der Regel im gewerblichen Bereich eingesetzt. Solche Geschirrspülautomaten weisen mindestens eine Spül- oder Vorspülzone, eine oder mehrere Pumpen oder Frischwasserklarspülzonen sowie mindestens eine Trocknungszone auf. Während des Prozessablaufes in den oben genannten unterschiedlichen Zonen entstehen Dampfschwaden (Wrasen) sowie feuchte warme Luft, die innerhalb der Maschine geleitet und über mindestens eine Einrichtung zur Wärmerückgewinnung abgeführt wird. In den Spül- oder Vorspülzonen solcher Geschirrspülautomaten wird zur Reinigung und Desinfektion warmes Wasser umgewälzt und über geeignet dimensionierte Düsen auf das durch den Durchlauf-Geschirrspülautomaten transportierte Spülgut aufgespritzt. Beim Austritt der Spülflotte, d.h. einem Gemisch hauptsächlich aus Wasser sowie Reinigungsmittel und beim Auftreffen der Spülflotte auf dem Spülgut und auf Teilen der Transporteinrichtung bzw. der Maschinen entstehen Dampfschwaden (Wrasen), welche aus der oder den Zonen über die jeweiligen Einlauf- bzw. Auslauföffnungen austritt, wenn keine geeigneten Maßnahmen ergriffen werden. Für unterschiedlich stark verschmutzte Spülgüter sind Durchlauf-Geschirrspülautomaten mit Pumpen ausgerüstet, die umschaltbar sind, um so den jeweiligen Druck der Reinigungsflotte und/oder die jeweilige Menge an Reinigungsflotte an den Verschmutzungsgrad des zu reinigenden Spülgutes anzupassen. Darüber hinaus wird erhitztes Wasser innerhalb einer Frischwasserklarspülzone und/oder einen Pumpenklarspülzone direkt auf das Spülgut gespritzt, um Reste der zuvor aufgebrachten Spülflotte sowie gelöste Speiserestepartikel abzuspülen. Durch die erhöhte Temperatur des erhitzten Wassers und die feine Versprühung entstehen Dampfschwaden (Wrasen), die aus der Zone über die Transportöffnungen austreten können, wenn hiergegen keine geeigneten Maßnahmen ergriffen werden.

Ferner wird in der Trockenzone erwärmte Luft mit einem Gebläse auf das Spülgut aufgeblasen. Je nach der gewählten Leistung und der Auslegung dieses Gebläses innerhalb der Trockenzone wird ein Teil der Restfeuchte abgeblasen und die Restfeuchte des Spülgutes verdampft. Die erwärmte Luft nimmt die Feuchtigkeit des Spülgutes auf. Ein großer Teil dieser Luftmenge wird umgewälzt, so dass es erforderlich ist, zur Aufnahme neuer Feuchtigkeit relativ trockene Umgebungsluft zuzusetzen. Dies bedeutet, dass die gleiche Luftmenge die zugeführt wird auch wieder abgeführt werden muss.

Über eine Einrichtung zur Wärmerückgewinnung wird über ein Gebläse feuchte warme Luft aus der Maschine abtransportiert, damit aus der Ein- bzw. Auslauföffnung des Geschirrspülautomaten keine Dampfschwaden oder feuchte bzw. feuchtwarme Luft nach außen austreten und in der Trockenzone, aus der während des Trocknungsprozesses feuchte Luft abgezogen wird, neue, relative trockene Umgebungsluft nachströmen kann.

Aus DT 22 53 624 C3 ist eine Vorrichtung zum Absaugen, Kühlen und Trocknen von Dampf aus einer Geschirrspülmaschine bekannt. Bei der Geschirrspülmaschine handelt es sich insbesondere um eine mehrstufige Maschine zum Einsatz in Restaurationsbetrieben. Der aus dieser austretende Dampf wird mit einer neben der Maschine angeordneten Wärmetauscher mit Wasser gekühlten Rohrschlangen, einer Absaugvorrichtung und einer den Dampf sammelnden und durch den Wärmetauscher leitenden Haube ausgerüstet. Die von einem Gehäuse umgebenen wassergekühlten Rohrschlangen des Wärmetauschers sind sowohl an Zuführleitungen für die im Betrieb eingeschaltete kontinuierliche Kühlwasserspeisung als auch an Zuführleitungen für die durch eine Schalteinrichtung steuerbare Einspeisung zusätzlichen Kühlwassers eingeschlossen. Die Schalteinrichtung wird in Abhängigkeit von dem die Geschirrspülmaschine mittels eines Förderers durchlaufenden Geschirrs gesteuert. Die Schalteinrichtung ist für die Betätigung eines an der Zuführleitung angeschlossenen Ventils vorgesehen und neben der Endstufe der Geschirrspülmaschine angeordnet. Die Schalteinrichtung ist insbesondere als ein von einem vorbeilaufenden Geschirrkorb betätigbarer Schalter ausgebildet.

DE 24 57 182 C2 bezieht sich auf eine Einrichtung zur Wärmerückgewinnung für eine Geschirrspülmaschine. Diese umfasst eine Wärmepumpe, bei der in einem Arbeitsmittelkreislauf ein Kompressor, mindestens ein der Erwärmung von Wasser für die Geschirrspülmaschine dienender Kondensator sowie ein erstes Expansionsventil und ein mit Abwärme der Geschirrspülmaschine beaufschlagter Verdampfer hintereinander geschaltet sind. Das erste Expansionsventil ist in Abhängigkeit von der Temperatur des Arbeitsmittels auf der Saugseite des Kompressors im Sinne einer Begrenzung dieser Temperatur auf einen höchstzulässigen Temperaturwert gesteuert. Parallel zum ersten Expansionsventil liegt ein weiteres, zweites Expansionsventil. Dies wirkt gegenüber dem ersten Expansionsventil stärker drosselnd und ist in Abhängigkeit vom Druck des Arbeitsmittels am Einlass des Verdampfers im Sinne eines Konstanthaltens dieses Druckes gesteuert. Der Durchfluss durch das erste Expansionsventil und das zweite Expansionsventil ist in Abhängigkeit von der Temperatur des erwärmten Wassers derart gesteuert, dass beim Unterschreiten einer vorgegebenen Temperatur des Wassers der Durchfluss durch das erste Expansionsventil freigegeben und der Durchfluss durch das zweite Expansionsventil gesperrt ist. Beim Überschreiten dieser vorgegebenen Temperatur ist der Durchfluss durch das erste Expansionsventil gesperrt, wohingegen der Durchfluss durch das zweite Expansionsventil freigegeben ist.

Aus DE 196 44 438 C2 ist eine Durchlauf-Geschirrspülvorrichtung sowie ein Verfahren zum Reinigen von Geschirr und/oder Tablettteilen bekannt. Die Durchlauf-Geschirrspülvorrichtung umfasst eine Reinigungszone mit Austrittsdüsen für Reinigungsflotte und einen Reinigungstank. Ferner sind eine Klarspülzone mit Austrittsdüsen für Pumpenklarspülflüssigkeit und ein Pumpenklarspültank vorgesehen. Zwischen den Austrittsdüsen für Reinigungsflotte und den Austrittsdüsen für die Pumpenklarspülflüssigkeit ist mindestens eine Vorspüldüse angeordnet, die mit Pumpenklarspülflüssigkeit beaufschlagt wird. Die Vorspüldüse und der Reinigungstank sind so angeordnet, dass die Pumpenklarspülflüssigkeit aus der Vorspüldüse dem Reinigungstank zugeführt wird. Dabei entspricht der Volumenstrom der Pumpenklarspülflüssigkeit der Vorspüldüse etwa 50 % der zugespeisten Frischwassermenge. In der Klarspülzone sind zusätzlich Frischwasserklarspüldüsen angeordnet, die mit einem Leitungswassernetz in Verbindung stehen, in welches ein Wärmetauscher eingekoppelt sein kann.

Die auf dem Markt befindlichen Maschinenlösungen sind derart ausgelegt, dass die Abluftmengen der mindestens einen Einrichtung zur Wärmerückgewinnung auf einen Betriebszustand - im Normalfall auf den ungünstigsten Betriebszustand - hin ausgelegt sind. Dies bedeutet, dass je nach Betriebszustand des Geschirrspülautomaten mehr Luft und damit mehr Energien aus dem Geschirrspülautomaten abgezogen wird, als erforderlich wäre, um das Auftreten von Dampfschwaden (Wrasen) zu verhindern und trockene und/oder relativ trockene Luft in die Trocknungszone einzubringen. Dies bedeutet für die Betreiber solcher Art ausgelegter Geschirrspülautomaten einen höheren Energieverlust bzw. einen sich daraus ergebenden höheren Energieaufwand als unbedingt erforderlich wäre.

An der Entstehung der Dampfschwaden (Wrasen) des Dampfes und der feuchten Luft innerhalb eines Geschirrspülautomaten haben die folgende Prozesse Anteil: die über Düsen eingespritzte Spülflotte in den Vorspül- bzw. Spülzonen des Geschirrspülautomaten weist in der Regel eine Temperatur zwischen 40 °C und 45 °C auf, wobei in der ersten Spülzone durchaus auch Temperaturen bis zu 55 °C und in der letzten Waschzone 65 °C auftreten können. Innerhalb der Frischwasserklarspülzone und/oder der Pumpenklarspülzone wird Klarspülwasser eingespritzt, welches eine Temperatur zwischen 60 °C bis 65 °C in der Pumpenzone und 80 °C bis 85 °C in der Frischwasserklarspülzone aufweist. Innerhalb der Trockenzone eines Durchlauf-Geschirrspülautomaten wird erwärmte Luft auf das Spülgut geblasen, mit welcher die Feuchtigkeitsreste vom Spülgut abgeblasen bzw. abgetrocknet werden. Die Temperaturen der in der Trockenzone erwärmten Luft liegen zwischen 60 °C und 90 °C.

Üblicherweise wird an einer oder an verschiedenen Stellen des Geschirrspülautomaten Luft abgesaugt, um einerseits zu verhindern, dass Dampfschwaden am Einlauf oder Auslauf des Geschirrspülautomaten austreten und andererseits zu erreichen, dass innerhalb der Trockenzone stets ausreichend trockene Luft zur Verfügung steht, die in der Lage ist Feuchtigkeit aufzunehmen. Die erwähnten Absaugstellen liegen üblicherweise am Einlauf und am Auslauf eines Durchlauf-Geschirrspülautomaten, am Einlauf und nach der Frischwasserklarspülung oder der Trockenzone, oder sind der Frischwasserklarspülung, der Trocknung nachgeordnet.

Die Richtung der jeweiligen Düsen für das Einspritzen von Spülflotte beziehungsweise das Einblasen von Luft in mindestens einer Vorspülzone, mindestens einer Spülzone bzw. innerhalb der Pumpen-Frischwasserklarspülung und/oder der Trocknungszone wird üblicherweise so gewählt, dass innerhalb des Geschirrspülautomaten eine Luftströmung in Richtung der Absaugstellen aufgebaut wird. Dies bedeutet jedoch, dass im ungünstigsten Falle an denjenigen Stellen abgesaugt wird, an denen ein hohes Temperatur- und Feuchte-Niveau herrscht, was zur Folge hat, dass eine hohe Temperatur- und eine hohe Feuchte-Differenz zwischen der über die Einrichtung zur Wärmerückgewinnung abgesaugten Luft aus dem Geschirrspülautomaten und der aus diesem ausgeblasenen Luft in den Raum oder an der Abluftfortleitung ins Freie vorhanden ist. Die Absaugmengen an den unterschiedlichen Punkten sind üblicherweise auf einen Betriebszustand ausgelegt - normalerweise den Maximalbetrieb bei Volllast. Diese Lösungen haben den Nachteil, dass bei dem Prozess bei den unterschiedlichen Betriebszuständen des Geschirrspülautomaten zu viel Luft und damit Wärme aus dem Geschirrspülautomaten abgesaugt wird und die Absaugung an solchen Stellen vorgenommen wird, bei denen das Temperatur bzw. das Feuchte-Niveau zu hoch ist. Ferner besteht bei diesen Lösungen die Gefahr, dass möglicherweise keimbelastete Aerosole von einem unreinen in einen reinen Bereich der Nachspülung gefördert werden.

### Darstellung der Erfindung

Der Erfindung liegt die Aufgabe zugrunde, einen Geschirrspülautomaten mit Transporteinrichtung so auszubilden, dass die Luftführung innerhalb der Maschine derart erfolgt, dass die Luftströmung gezielt von einem wärmeren Bereich in einen kälteren Bereich des Geschirrspülautomaten verläuft.

Erfindungsgemäß wird diese Aufgabe durch die Merkmale des Patentanspruches 1 gelöst.

In vorteilhafter Weise wird bei einer Lösung die Luft richtungsmäßig entgegen der Transportrichtung des zu reinigenden Spülgutes geleitet und dabei jeweils nur soviel Luft durch den Geschirrspülautomaten geführt und abgesaugt, wie gemäß der Rahmenbedingungen erforderlich. Zu den Rahmenbedingungen sind unter anderem zu zählen, dass im Bereich des Einlaufes und des Auslaufes des Geschirrspülautomaten kein Dampfschwaden (Wrasen)-Austritt sowie kein Dampfaustritt erfolgen darf und in der Trockenzone stets genügend trockene Luft vorhanden ist, die eine Feuchteaufnahme vom zu trocknenden Spülgut ermöglicht.

Durch die erfindungsgemäß vorgeschlagene Lösung werden nicht nur die beiden oben genannten Rahmenbedingungen erfüllt, sondern weiterhin folgende aufgeführten Vorteile erreicht. Durch die erfindungsgemäße Luftführung durch einen Geschirrspülautomaten wird energiereiche Luft in Bereiche des Geschirrspülautomaten geführt, in denen diese Energie, so zum Beispiel die Lufttemperatur, direkt ohne dass eine Zwischenschaltung von Wärmeüberträgern erforderlich wäre, verwendet werden kann. Ferner werden entstehende Aerosole immer von dem hinsichtlich der Aerosolbelastung reineren Bereich in den hinsichtlich der Aerosolbelastung unreineren Bereich des Geschirrspülautomaten transportiert. Die Abluft des Geschirrspülautomaten kann durch Zusetzen einer geringen Menge Kühlwassers soweit abgekühlt werden, dass sie direkt in den Raum abgeleitet werden kann, in welchem der Geschirrspülautomat aufgestellt ist, so dass keine übermäßige Erwärmung dieses Raumes zu befürchten steht und eine Abluftführung nach außen, was bauseits zu erheblichen Schwierigkeiten führen kann, vermieden werden kann.

Gemäß der vorgeschlagenen Lösung wird eine Absaugung innerhalb des Einlaufbereiches des Geschirrspülautomaten vorgesehen. Es erfolgt ein Strömungsaufbau durch die in der Spülzone oder der Klarspülung eingesetzten Düsen oder durch die in der Trocknungszone vorhandenen Düsen zum Einblasen von Warmluft, in dem diese Düsen hinsichtlich der Ausströmrichtung bezogen auf den Einlaufbereich bzw. den Auslaufbereich des Geschirrspülautomaten geregelt verändert werden, abhängig vom jeweils stattfindenden Prozess. Durch die aus den Düsen austretende Luft wird die diese umgebende Luft mitgerissen und ein Strömungsaufbau vom Auslaufbereich des Geschirrspülautomaten in dessen Einlaufbereich erzielt.

Durch die erfindungsgemäß vorgeschlagene Lösung ist eine Veränderung der Gesamtabsaugmenge abhängig vom jeweiligen Prozess möglich. Über die Ausströmrichtung aller Medien, sei es das Reinigungsfluid, sei es das Frischwasser und sei die in der Trocknungszone ausgeblasene Luft kann die Luftströmung innerhalb des Geschirrspülautomaten in Richtung vom Auslauf zum Einlauf, d.h. entgegengesetzt zur Transportrichtung des zu reinigenden Spülgutes beeinflusst werden.

### Zeichnungen

Anhand der Zeichnungen wird die Erfindung nachstehend eingehender beschrieben.

Es zeigt:
- Figur 1: eine schematische Darstellung der erfindungsgemäß vorgeschlagenen Luftführung durch einen Durchlauf-Geschirrspülautomaten,
- Figur 2: ein innerhalb einer Trocknungszone angeordnetes Gebläse mit einer verschwenkbar ausgebildeten Austrittsdüse und
- Figur 3: das in Figur 2 dargestellte, innerhalb einer Trocknungszone aufgenommene Warmluftgebläse mit einer verschwenkbaren Austrittsdüse, wobei diese in eine ausgelenkte Position gestellt ist.

### Ausführungsvarianten

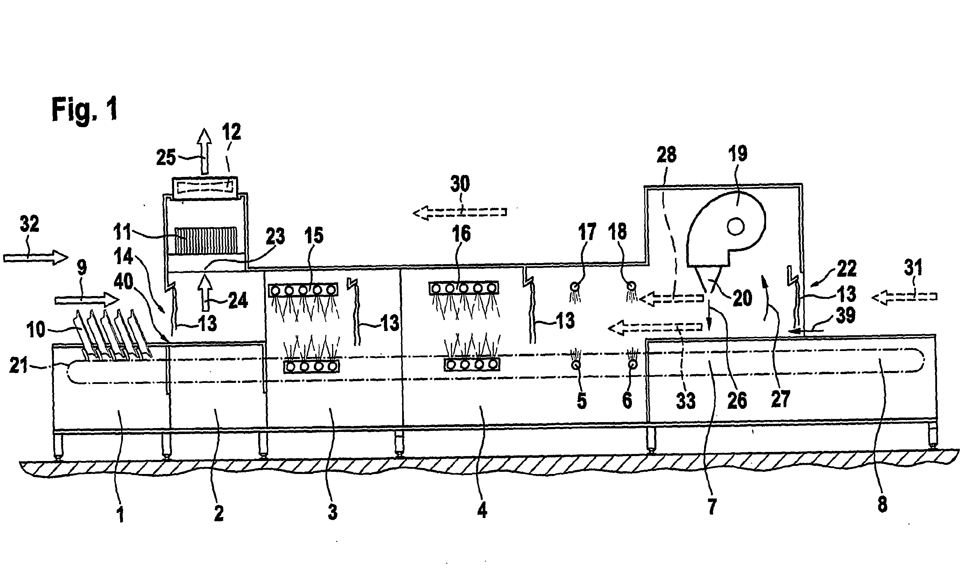

Figur 1 ist in schematischer Darstellung ein Geschirrspülautomat zu entnehmen, in welchem eine der Durchlaufrichtung von Spülgut entgegengesetzte Luftströmung verwirklicht ist. Der Transport des Spülgutes erfolgt in dem dargestellten Geschirrspülautomaten mittels eines Transportbandes 21.

An einem Einlauf 1 läuft auf der Oberseite eines Transportbandes 21 aufgenommenes Spülgut 10 in einen Einlauftunnel 2 ein. Der Einlauftunnel 2 ist mittels eines Trennvorhanges 13 nach außen abgeschirmt, um den Austritt von Dampfschwaden im Bereich des Einlaufes 1 des Geschirrspülautomaten zu verhindern. Nach dem das an der Oberseite des Transportbandes 21 aufgenommene Spülgut 10, welches in Transportrichtung 9 transportiert wird, den Einlauftunnel 2 passiert hat, wird es in eine Vorspülzone 3 transportiert. Innerhalb der Vorspülzone 3 ist ein Vorspülsystem 15 angeordnet. Das Vorspülsystem 15 weist Sprührohre auf, welche an der Unterseite bzw. oberhalb des umlaufenden Transportbandes 21 angeordnet sind. Über eine in Figur 1 nicht dargestellte in ihrer Leistung regelbare Pumpe wird das Vorspülsystem 15 je nach Verschmutzungsgrad des Spülgutes 10 mit Reinigungsfluid beaufschlagt. Die Vorspülzone 3 ist über einen weiteren Trennvorhang 13 von einer sich anschließenden Spülzone 4 getrennt.

Nach Passage der Vorspülzone 3 läuft das Spülgut 10 in die Spülzone 4 ein. Die Spülzone 4 umfasst ebenfalls ein Spülsystem, bezeichnet durch Bezugszeichen 16. Nachdem das Spülgut 10 die Vorspülzone 3 verlassen hat, tritt dieses in die Spülzone 4 ein. Auch die Spülzone umfasst ein Spülsystem 16, welches oberhalb und unterhalb der Oberseite des umlaufenden Transportbandes 21 angeordnet ist. Der Spülzone 4 ist ebenfalls eine in ihrer Pumpenleistung variabel regelbare Pumpe zugeordnet, über welche die Sprührohre des Spülsystems 16 je nach Verschmutzungsgrad des Spülsystems 16 je nach Verschmutzungsgrad des Spülgutes 10 mit Reinigungsfluid beaufschlagt werden, welches unter höherem oder niedrigerem Druck - abhängig vom Verschmutzungsgrad - steht. Die Spülzone 4 ist durch einen weiteren Trennvorhang 13 von der Pumpenklarspülzone 5 getrennt, welche ein oberhalb und ein unterhalb der Oberseite des Transportbandes 21 angeordnetes Spülsystem in Gestalt von zwei einander gegenüberliegenden Sprührohren aufweist. An die Pumpenklarspülzone 5 schließt sich eine Frischwasserklarspülzone 6 an. Innerhalb der Frischwasserklarspülzone 6 wird das Spülgut 10 mit Frischwasser abgespült, um verbliebene Verunreinigungen bzw. das zuvor aufgebrachte Reinigungsgut vor Eintritt des Spülgutes 10 in eine Trocknungszone 7 von diesem zu entfernen. Der Frischwasserklarspülzone 6 nachgeschaltet, befindet sich ein weiterer Trennvorhang 13, welcher die Frischwasserklarspülzone 6 von der Trocknungszone 7 trennt.

Innerhalb der Trocknungszone 7, welcher eine Abnahmestrecke 8 nachgeschaltet ist, befindet sich ein Trocknungsgebläse 19. Das Trocknungsgebläse 19 saugt Luft an und erwärmt diese. Die im Trocknungsgebläse 19 erwärmte Luft tritt in einen Austrittstrichter 20 ein, an dessen unteren Ende sich eine Austrittsdüse befindet, welche die austretende Trocknungsluft auf das die Trocknungszone 7 passierende Spülgut 10 lenkt. Unterhalb der Trocknungszone 7 kann eine Umlenkfläche 41 vorgesehen sein, welche die in Austrittsrichtung 26 aus der Austrittsdüse austretende Warmluft in Strömungsrichtung 27 umlenkt, so dass diese teilweise wieder dem Trocknungsgebläse 19 zuströmt. In Transportrichtung 9 des Spülgutes 10 gesehen, ist die Trocknungszone 7 über einen weiteren Trennvorhang 13 gegen die Abnahmestrecke 8 abgeschirmt.

Während des Transportes des Spülgutes 10 durch den in Figur 1 dargestellten Geschirrspülautomaten nimmt dessen Temperatur kontinuierlich zu. Von Raumtemperatur steigt die Temperatur des Spülgutes 10 in der Vorspülzone 3 auf beispielsweise eine Temperatur von 40 °C bis 45 °C, in der sich daran anschließenden Spülzone 4 auf 55 °C bis 65 °C und in der sich daran anschließenden Pumpenklarspülzone 5 bzw. Frischwasserklarspülzone 6 auf eine Temperatur zwischen 60 °C und 85 °C an. In der Trocknungszone 7 weist das abzutrocknende Spülgut 10 eine Temperatur von bis zu 90 °C auf.

Über das der Wärmerückgewinnungs-Einrichtung 11 zugeordnete Gebläse 12 wird innerhalb des Geschirrspülautomaten ein Unterdruck erzeugt, der die Absaugung eines Abluftstromes 24 an einer Absaugstelle 23 ermöglicht. Durch die Absaugung des Abluftstromes 24 an der Absaugstelle 23 wird verhindert, dass am Einlauf 1 und an der Abnahmestrecke 8 Dampfschwaden (Wrasen) aus dem Geschirrspülautomaten austreten. Dazu dienen einerseits die dort angeordneten Trennvorhänge 13 und andererseits das einen Unterdruck erzeugende Gebläse 12. Unterhalb der Trennvorhänge 13 am Einlauftunnel 2 und an der Abnahmestrecke 8 befinden sich unterhalb der Trennvorhänge 13 spaltförmige Öffnungen, über welche jeweils Außenluftströme 31 bzw. 32 in den Geschirrspülautomaten eintreten, und welche dem Gesamtvolumenstrom des Abluftstromes 24 entsprechen. Die Luftführung innerhalb des Geschirrspülautomaten gemäß der Darstellung in Figur 1 ist so gewählt, dass der Abluftstrom die verschiedenen, vom Spülgut 10 durchlaufenen Zonen entgegen der Transportrichtung 9 des Spülgutes 10 durchströmt, wie durch Bezugszeichen 30 angedeutet. Die Strömungsbewegung 30 des Abluftstromes 24 wird einerseits durch das der Wärmerückgewinnungseinrichtung 11 zugeordnete Gebläse 12 und andererseits durch das Trocknungsgebläse 19 herbeigeführt. Je nach Neigung der Austrittsdüsen des Trocknungsgebläses 19 kann aus der Trocknungszone 7 eine erste kleinere Luftmenge 28, bzw. eine zweite, größere Luftmenge 33 abgezogen werden. Ist in der Trocknungszone 7 kein Spülgut vorhanden, fällt in der Trocknungszone 7 weniger Feuchtigkeit an und es wird am Übergang der Trocknungszone 7 in die Frischwasserklarspülzone 6 nur die erste Luftmenge 28 abgeführt. Ist in der Trocknungszone 7 jedoch Spülgut zur Trocknung vorhanden, dann muss zusätzlich zu der ersten Luftmenge 28 noch die zweite, größere Luftmenge 33 aus der Trocknungszone 7 am Übergang der Trocknungszone 7 in die Frischwasserklarspülzone 6 abgeführt werden. Dies bedeutet, dass über die Öffnung 22 in Richtung 31 unterschiedliche Luftmengen, abhängig von den Luftströmen 28 beziehungsweise 33 nachgeführt werden. Über die Einlauföffnung 14 wird hingegen stets der zweite Außenluftstrom 32 angesaugt und auch über die Wärmerückgewinnungseinrichtung 11 abgeführt. Dadurch ist sichergestellt, dass an der Einlauföffnung 14 in den Einlauftunnel 2 keine Dampfschwaden aus dem Geschirrspülautomaten austreten, was analog für die Öffnung im Bereich des Auslaufes 22 des Geschirrspülautomaten gilt.

Innerhalb der Trocknungszone 7 wird die Luft mittels des Gebläses 19 umgewälzt und teilweise mit angesaugter Frischluft (erster Außenluftstrom 31) vermischt, um die Luft für Feuchtigkeit aufnahmefähig zu halten. Über das Trocknungsgebläse 19 wird die Luft nach Passage eines Austrittstrichters 20 über Austrittsdüsen auf das zu trocknende Spülgut 10 geblasen. Das aus der Trocknungszone 7 abgesaugte Luftvolumen, sei es die erste Luftmenge 28, sei es die zweite Luftmenge 33 (abhängig vom Betriebszustand der Trocknungszone 7), wird innerhalb des Geschirrspülautomaten über die Frischwasserklarspülung 6, die Pumpenklarspülzone 5, die Spülzone 4 sowie die Vorspülzone 3 geführt. Dabei kann der die aufgezählten Zonen passierende Luftstrom Energie in Form von Wärme an die jeweilige Zone abgeben, wird somit abgekühlt und verlässt den Geschirrspülautomaten an der Absaugstelle 23 als Abluftstrom 24 mit einem günstigen Energieniveau. Der Energieinhalt des Abluftstromes wird während der Passage in Strömungsrichtung 30 durch die verschiedenen Zonen des Geschirrspülautomaten abgekühlt. Dadurch wird erreicht, dass der Abluftstrom 24, welcher den Geschirrspülautomaten oberhalb der Wärmerückgewinnungseinrichtung 11 verlässt, seine Wärme vor Abfuhr an die Umgebung an die der Trocknungszone 7 vorgelagerten Zonen 3, 4, 5 bzw. 6 abgibt. Je nach Anzahl der der Trocknungszone 7 vorgelagerten Zonen 3, 4, 5 oder 6 kann die Wärmerückgewinnungs-Einrichtung 11 auch näher in Bezug auf die Trocknungszone 7 platziert werden.

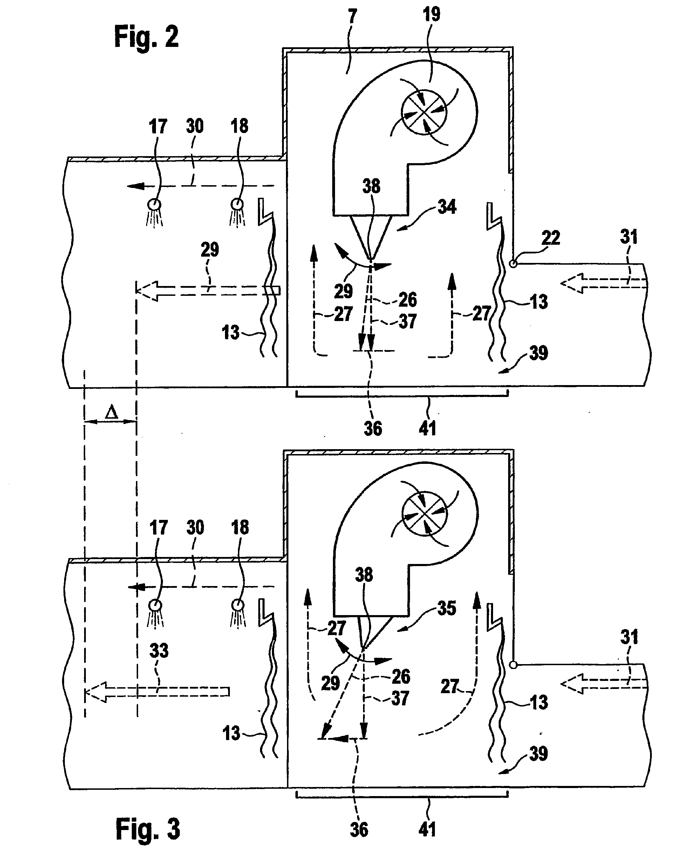

Aus der Darstellung gemäß Figur 2 geht das in der Trocknungszone angeordnete Trockengebläse mit Austrittsdüsen näher hervor.

Der Darstellung gemäß Figur 2 ist entnehmbar, dass die Spülsysteme 17, 18 der Pumpenklarspülzone 5 bzw. der Frischwasserklarspülzone 6 mittels eines weiteren Trennvorhanges 13 gegen die Trocknungszone 7 abgetrennt sind. Damit wird der Übertritt von Spritzwasser aus der Pumpenklarspülzone 5 bzw. der Frischwasserklarspülzone 6 in die Trocknungszone 7 vermieden. Über das in der Trocknungszone 7 angeordnete Trockengebläse 19 wird Luft aus der Trocknungszone 7 angesaugt, erwärmt und über einen Austrittsquerschnitt 38 einer Austrittsdüse wieder in die Trocknungszone 7 in Richtung auf das abzublasende Spülgut 10 ausgeblasen. In der Darstellung gemäß Figur 2 befindet sich die Austrittsdüse 26 in einer etwa vertikalen Stellung, wobei der aus der Austrittsdüse 26 austretende Warmluftstrahl eine Horizontalkomponente 36 sowie eine Vertikalkomponente 37 aufweist. Die Austrittsdüse 26 unterhalb des Trockengebläses 19 ist schwenkbar ausgebildet und in Richtung des Pfeils 29 verschwenkbar. Die aus der Austrittsdüse 26 austretenden Luftstrahlen treffen auf eine unterhalb des Transportbandes 21 angeordnete Umlenkfläche 41 auf. Durch diese werden die das Spülgut 10 abblasenden Warmluftstrahlen umgelenkt und erzeugen eine Strömung 27 innerhalb der Trocknungszone 7. Um die Feuchteaufnahmefähigkeit der innerhalb der Trocknungszone 7 umgewälzten Warmluft zu verbessern, wird über den ersten Ansaugspalt 39 unterhalb des weiteren Trennvorhanges 13 hinter der Trocknungszone 7 der erste Außenluftstrom 31 angesaugt. In Gegenströmungsrichtung 30 verlässt die erste Luftmenge 28 die Trocknungszone 7. Bei eingeschaltetem Trockengebläse 19 ist die erste Luftmenge 28 mit dem ersten Außenluftstrom 31 identisch. Im in Figur 2 dargestellten Fall weist die Austrittsdüse 26 unterhalb des Trockengebläses 19 nur eine geringe Schrägstellung aus, so dass nur die erste Luftmenge 28 in Gegenstromrichtung 30 durch den Geschirrspülautomaten geführt wird. Dies ist zum Beispiel dann der Fall, wenn die Luft innerhalb der Trocknungszone 7 einen geringen Feuchtegehalt hat. Die erste Luftmenge 28 ist dann so bemessen, dass an der Auslauföffnung 22 keine Dampfschwaden oder feuchte Luft aus dem Geschirrspülautomaten austreten.

In der Darstellung gemäß Figur 3 ist die Austrittsdüse unterhalb des Trockengebläses in eine geschwenkte Position gestellt. Abhängig vom Grad der Auslenkung 29 der Austrittsdüse 26 weist der aus dieser austretende Warmluftstrahl eine größer bemessene Horizontalkomponente 36 auf. Ferner weist auch der in der zweiten Stellung 35 der Austrittsdüse 26 aus dieser auftretende Warmluftstrahl die Vertikalkomponente 37 auf. Aufgrund der Vertikalkomponente 37 wird eine Strömung 27 von Warmluft innerhalb der Trocknungszone 7 erzeugt, welche die Umwälzung der Luft innerhalb der Trocknungszone 7 durch das Trockengebläse 19 begünstigt. Die Vertikalkomponente 37 wirkt mit der im Wesentlichen horizontal verlaufenen Umlenkfläche 41 zusammen, so dass die auf die Umlenkfläche 41 auftreffende Warmluft wieder nach oben in Richtung auf das Trockengebläse 19 umgeleitet wird. Aufgrund der größeren Horizontalkomponente 36 des aus der Austrittsdüse 26 austretenden Warmluftstrahls wird die zweite Luftmenge 33 in Strömungsrichtung 30 - entgegen der Transportrichtung des Spülgutes 10 - in Richtung auf die in Figur 1 dargestellte Absaugstelle 23 geleitet. Dies ist beispielsweise dann der Fall, wenn der Feuchtegehalt der Warmluft in der Trocknungszone 7 zunimmt. Wird die zweite Luftmenge 33 in Strömungsrichtung 30 entgegen der Transportrichtung des Spülgutes 10 durch den Geschirrspülautomaten geführt, wird die Leistung des Gebläses 12 der Wärmerückgewinnungseinrichtung 11 entsprechen erhöht, um diese größere Luftmenge aus den Geschirrspülautomaten abzuführen.

Auch bei der Darstellung gemäß Figur 3 tritt über den ersten Ansaugspalt 39 der erste Außenluftstrom 31 in die Trocknungszone 7 ein und vermischt sich mit der in dieser durch das Trockengebläse 19 umgewälzten Luft. Der erste Außenluftstrom 31 weist einen wesentlich geringeren Wassergehalt auf als die innerhalb der Trocknungszone 7 umgewälzte Luft und verbessert daher bei Vermischung mit dieser das Feuchteaufnahmeverhalten der Warmluft innerhalb der Trocknungszone 7.

Durch die Luftführung in Strömungsrichtung 30 entgegen der Transportrichtung des Spülgutes 9 durch den Geschirrspülautomaten gemäß der Darstellung in Figur 1 wird energiereiche, d.h. warme Luft, in Bereiche des Geschirrspülautomaten geführt, in denen die Energie direkt ohne zwischengeschaltete Wärmeüberträger eingesetzt werden kann. Entstehende Aerosole werden aufgrund der vorgeschlagenen Luftführung stets von reineren in unreinere Bereiche des Geschirrspülautomaten befördert. Die Abluft des Geschirrspülautomaten kühlt sich aufgrund der Passage der Zonen 6, 5, 4 und 3 - in Strömungsrichtung 30 der Abluft gesehen - soweit ab, dass diese innerhalb der Wärmerückgewinnungseinrichtung 11 nur geringe Mengen an Kühlwasser erfordert, bevor sie in Austrittsrichtung 25 in die Umgebung geleitet wird. Durch die erfindungsgemäß vorgeschlagene Lösung kann ein Luftströmungsaufbau innerhalb eines Geschirrspülautomaten entlang der Austrittsdüsen innerhalb der Spülzonen 3, 4 oder Klarspülzonen 5, 6 und der Trocknung 7 erreicht werden, bei der die Ausströmung, bezogen auf den Einlauf 1 und den Auslauf 8 des Geschirrspülautomaten, geregelt verändert werden kann, abhängig vom jeweiligen in den einzelnen Zonen des Geschirrspülautomaten ablaufenden Prozesses. Weiterhin bietet die erfindungsgemäß vorgeschlagene Luftführung durch einen Geschirrspülautomaten in vorteilhafter Weise die Möglichkeit, den Gesamtabluftstrom 24 abhängig vom Prozess zu beeinflussen.

Der in Figur 1 dargestellte Geschirrspülautomat kann mittels einer Regelung so betrieben werden, dass gewährleistet ist, dass der den Geschirrspülautomaten verlassende Abluftstrom stets minimiert ist. Eingangsgrößen für die Regelung sind zum Beispiel der Betriebsparameter, ob Spülgut 10 in der Trocknungszone 7 vorhanden ist oder nicht, wie hoch der Feuchtegehalt der Luft innerhalb der Trocknungszone 7 ist und wie hoch die Temperatur dort ist. Abhängig von diesen Eingangsgrößen einer Regelung lassen sich die Stellgrößen, Verschwenkweg 29 der Austrittsdüse 26 unterhalb des Trockengebläses 19 sowie die Leistung des Antriebes des Gebläses 12 in der Wärmerückgewinnungseinrichtung 11 anpassen. Ist die Trocknungszone 7 nicht in Betrieb, so wird über das Gebläse 12 der Wärmerückgewinnungseinrichtung 11 lediglich der erste Außenluftstrom 31 sowie der zweite Außenluftstrom 32 abgesaugt, um ein Austreten von Dampfschwaden bzw. Feuchte an Einlauf 1 und Auslauf 8 des Geschirrspülautomaten zu unterbinden. Ist die Trocknungszone 7 hingegen in Betrieb, so wird die zweite Luftmenge 33 aus der Trocknungszone 7, die sich aus dem ersten Außenluftstrom 31 und einem weiteren bei hohem Feuchtegehalt aus der Trocknungszone 7 abgesaugten Luftanteil zusammensetzt, samt des zweiten Außenluftstromes 32 aus dem Geschirrspülautomaten abgeführt.

Der Darstellung gemäß Figur 1 ist ein Durchlauf-Geschirrspülautomat zu entnehmen, bei welchem ein umlaufendes Transportband 21 dargestellt ist. Anstelle des umlaufenden Transportbandes kann der Durchlauf des Spülgutes 10 in Transportrichtung 9 durch den Geschirrspülautomaten auch anhand von Transportkörben, die mittels einer Kette oder einer Klinkenschiene durch den Geschirrspülautomaten gefördert werden, erfolgen. Der in Figur 1 dargestellte Geschirrspülautomat umfasst eine Vorspülzone 3 sowie die mit Bezugszeichen 5 bezeichnete Pumpenklarspülzone 5, die jedoch nicht zwingend erforderlich ist sowie die Frischwasserklarspülzone 6. Die Vorspülzone 3 sowie die Pumpenklarspülzone 5 können lediglich optional vorgesehen sein. Wesentlich ist, dass innerhalb des Geschirrspülautomaten eine Luftströmung erzeugt wird, die der Transportrichtung 9 des Spülgutes 10 durch den Geschirrspülautomaten entgegengerichtet ist. In vorteilhafter Weise ist dazu die Absaugstelle 23 stets der Trocknungszone 7 - in Durchlaufrichtung 9 des Spülgutes 10 gesehen - vorgeschaltet, um eine Wärmeabgabe des Abluftstromes an die der Trocknungszone 7 vorgeschalteten Zonen des Geschirrspülautomaten zu ermöglichen. Mit Δ ist die Differenz zwischen der 1. Luftmenge 29 und der 2. Luftmenge 33 bezeichnet.

### Bezugszeichenliste

- 1: Einlauf
- 2: Einlauftunnel
- 3: Vorspülzone
- 4: Spülzone
- 5: Pumpenklarspülzone
- 6: Frischwasserklarspülzone
- 7: Trocknungszone
- 8: Abnahmestrecke
- 9: Transportrichtung Spülgut
- 10: Spülgut
- 11: Wärmerückgewinnungs-Einrichtung
- 12: Gebläse
- 13: Trennvorhang
- 14: Einlauföffnung
- 15: Vorspülsystem
- 16: Spülsystem
- 17: Spülsystem (Pumpenklarspülzone)
- 18: Spülsystem (Frischwasserklarspülzone)
- 19: Trockengebläse
- 20: Austrittstrichter
- 21: Transportband
- 22: Auslauföffnung
- 23: Absaugstelle
- 24: Abluftstrom
- 25: Austrittsrichtung
- 26: Austrittsdüsen und Strahl
- 27: Austritts-(Strömung)
- 28: erste Luftmenge
- 29: Schwenkweg
- 30: Strömungsrichtung im Geschirrspülautomaten
- 31: erster Außenluftstrom
- 32: zweiter Außenluftstrom
- 33: zweite Luftmenge
- 34: erste Stellung Austrittsdüse 26
- 35: zweite Stellung Austrittsdüse 26

- 36: Horizontalkomponente
- 37: Vertikalkomponente
- 38: Querschnitt Austrittsdüse
- 39: erster Ansaugspalt
- 40: zweiter Ansaugspalt
- 41: Umlenkfläche
- Δ: Luftmengendifferenz

## Patentansprüche

1. Durchlauf-Geschirrspülautomat mit mindestens einer Spülzone (3, 4), mindestens einer Klarspülzone (5, 6), einer Trocknungszone (7), einer Absaugstelle (23) für einen Abluftstrom (24) und einer Transporteinrichtung (21) zur Förderung von Spülgut (10) in Transportrichtung (9) durch den Durchlauf-Geschirrspülautomaten, **gekennzeichnet**, dass der Abluftstrom (24) entgegen der Transportrichtung (9) des Spülgutes (10) durch den Geschirrspülautomaten durch geregelte Strömungsbeaufschlagung aus den Düsen (26) zum Einblasen von warmluft in der Trocknungszone (7) und/oder aus den Düsen der Spülzone (3, 4) erzeugt wird.

2. Durchlauf-Geschirrspülmaschine gemäß Anspruch 1, **dadurch gekennzeichnet, dass** die Absaugstelle (23) zur Absaugung des Abluftstromes (24) im Bereich eines Einlaufes (1) des Geschirrspülautomaten angeordnet ist.

3. Durchlauf-Geschirrspulmaschine gemäß Anspruch 1, **dadurch gekennzeichnet, dass** in der Trocknungszone (7) ein Trockengebläse (19) angeordnet ist, dem die verschwenkbar ausgebildete Austrittsdüsen (26) der warmluft zugeordnet sind.

4. Durchlauf-Geschirrspillautomat gemäß Anspruch 3, **dadurch gekennzeichnet, dass** aus der Trocknungszone (7) austretende Abluftvolumina (28, 33) abhängig von der Position (34,35) der Austrittsdüsen (26) sind.

5. Durchlauf Geschirrspülautomat gemäß Anspruch 4, **dadurch gekennzeichnet, dass** in der ersten Stellung (34) der verschwenkbar angeordneten Austrittsdüsen (26) innerhalb der Trocknungszone (7) der Geschirrspülautomat am Einlauf (1) und Auslauf (22) dampfschwadenfrei betreibbar ist

6. Durchlauf-Geschirrspülautomat gemäß Anspruch 4, **dadurch gekennzeichnet, dass** eine zweite, aus der Trocknungszone (7) abführbare Luftmenge (33) abhängig von der Schwenkposition (29, 15) der Austrittsdüsen (26) des Trockengebläses (19) variierbar ist.

7. Durchlauf-Geschirrspülautomat gemäß Anspruch 3, **dadurch gekennzeichnet, dass** im Bereich der Trocknungszone (7) unterhalb der Austrittsdüsen (26) eine Umlenkfläche (41) aufgenommen ist.

8. Durchlauf-Geschirrspülautomat gemäß Anspruch 7, **dadurch gekennzeichnet, dass** die Umlenkfläche (41) im Wesentlichen horizontal ausgebildet ist und unterhalb der Einrichtung (21) zum Transport des Spülgutes (10) verläuft.

9. Durchlauf-Geschirrspülautomat gemäß Anspruch 1, **dadurch gekennzeichnet, dass** der Trocknungszone (7), auslaufseitig in Transportrichtung (9) des Spülgutes (10) gesehen, ein Trennvorhang (13) zugeordnet ist, der eine Ansaugöffnung (39) begrenzt, über welche ein Außenluftstrom (31) in die Trocknungszone (7) ansaugbar ist

10. Durchlauf-Geschirrspülautomat gemäß Anspruch 1, **dadurch gekennzeichnet, dass** die Gebläseleistung eines Gebläses (12) der Wärmerückgewinnungseinrichtung (11) abhängig von einer aus der Trocknungszone (7) abzuführenden Luftmenge (28, 33) ist

11. Durchlauf-Geschirrspülautomat gemäß Anspruch 1, **dadurch gekennzeichnet, dass** der über die Absaugstelle (23) abgesaugte Abluftstrom (24) den über die Ansaugöffnungen (39, 40) angesaugten Außenluftströmen (31, 32) entspricht.

12. Durchlauf-Geschirrspülautomat gemäß Anspruch 4, **dadurch gekennzeichnet, dass** die Austrittsdüsen (26) innerhalb der Trocknungszone (7) elektromotorisch, pneumatisch oder hydraulisch verstellbar oder über Hebel mechanisch verstellbar sind.

13. Durchlauf-Geschirrspülautomat gemäß Anspruch 1, **dadurch gekennzeichnet, dass** die Austrittsdüsen (26) der Trocknungszone (7) während des Betriebs des Durchlauf-Geschirrspülautomaten in Schwenkrichtung (29) verstellbar sind.

14. Durchlauf-Geschirrspülautomat gemäß Anspruch 1, **dadurch gekennzeichnet, dass** der Abluftstrom (24) mittels eines der Wärmerückgewinnungseinrichtung (11) zugeordneten, drehzahlgeregelten Gebläses (12) geregelt wird.

15. Durchlauf-Geschirrspülautomat gemäß einem oder mehreren der vorhergehenden Ansprüche, **dadurch gekennzeichnet, dass** die Position (34, 35) der Austrittsdüsen (26) der Trocknungszone (7) und oder die Leistung des Gebläses (12) der Wärmerückgewinnungseinrichtung (11) abhängig von Betriebszuständen des Geschirrspülautomaten und/oder von Prozessparametern Temperatur, Feuchtegehalt in der Trocknungszone (7) oder am Einlauf (1) und Auslauf (8) geregelt werden.

16. Durchlauf-Geschirrspülautomat gemäß Anspruch 15, **dadurch gekennzeichnet, dass** die Regelung der StellgröBenposition (34, 35) der Austrittsdüsen (26) der Trocknungszone (7) und/oder Leistung des Antriebes des Gebläses (12) abhängig von in der Trocknungszone (7) vorhandenem Spülgut (10), dem Feuchtegehalt der in der Trocknungszone (7) zirkulierenden Warmluft, und/oder der in der Trocknungszone (7) herrschenden Temperatur geregelt werden.

## Claims

1. Conveyor dishwasher having at least one washing zone (3, 4), at least one rinsing zone (5, 6), a drying zone (7), a suction-extraction location (23) for an exhaust-air stream (24) and a transporting device (21) for conveying wash ware (10) in the transporting direction (9) through the conveyor dishwasher, **characterized in that** the exhaust-air stream (24) is produced counter to the transporting direction (9) of the wash ware (10) through the dishwasher by regulated action on flow from the nozzles (26) for blowing hot air into the drying zone (7) and/or from the nozzles of the washing zone (3, 4).

2. Conveyor dishwasher according to claim 1, **characterized in that** the suction-extraction location (23) for extracting the exhaust-air stream (24) by suction is arranged in the region of an inlet (1) of the dishwasher.

3. Conveyor dishwasher according to Claim 1, **characterized in that** a drying fan (19) is arranged in the drying zone (7) and has the pivotably designed exit nozzles (26) for hot air assigned to it.

4. Conveyor dishwasher according to Claim 3, **characterized in that** volumes of exhaust air (28, 33) passing out of the drying zone (7) are dependent on the position (34, 35) of the exit nozzles (26).

5. Conveyor dishwasher according to Claim 4, **characterized in that**, in the first position (34) of the pivotably arranged exit nozzles (26) within the drying zone (7), the dishwasher can be operated without clouds of steam at the inlet (1) and outlet (22).

6. Conveyor dishwasher according to Claim 4, **characterized in that** a second quantity of air (33) which can be channeled away out of the drying zone (7) can be varied in dependence on the pivoting position (29, 35) of the exit nozzles (26) of the drying fan (19).

7. Conveyor dishwasher according to Claim 3, **characterized in that** a deflecting surface (41) is accommodated in the region of the drying zone (7), beneath the exit nozzles (26).

8. Conveyor dishwasher according to Claim 7, **characterized in that** the deflecting surface (41) is of essentially horizontal design and runs beneath the device (21) for transporting the wash ware (10).

9. Conveyor dishwasher according to Claim 1, **characterized in that** the drying zone (7) is assigned a separating curtain (13) on the outlet side, as seen in the transporting direction (9) of the wash ware (10), and this separating curtain bounds an intake opening (39) via which an external-air stream (31) can be taken into the drying zone (7).

10. Conveyor dishwasher according to Claim 1, **characterized in that** the capacity of a fan (12) of the heat-recovery device (11) is dependent on a quantity of air (28, 33) which can be channeled away out of the drying zone (7).

11. Conveyor dishwasher according to Claim 1, **characterized in that** the exhaust-air stream (24) which is extracted via the suction-extraction location (23) corresponds to the external-air streams (31, 32) which are taken in via the intake openings (39, 40).

12. Conveyor dishwasher according to Claim 4, **characterized in that** the exit nozzles (26) within the drying zone (7) can be adjusted by electromotive, pneumatic or hydraulic means or mechanically via levers.

13. Conveyor dishwasher according to Claim 1, **characterized in that** the exit nozzles (26) of the drying zone (7) can be adjusted in the pivoting direction (29) during operation of the conveyor dishwasher.

14. Conveyor dishwasher according to Claim 1, **characterized in that** the exhaust-air stream (24) is regulated by means of a speed-regulated fan (12) assigned to the heat-recovery device (11).

15. Conveyor dishwasher according to one or more of the preceding claims, **characterized in that** the position (34, 35) of the exit nozzles (26) of the drying zone (7) and/or the capacity of the fan (12) of the heat-recovery device (11) are/is regulated in dependence on operating states of the dishwasher and/or on the following process parameters: temperature, moisture content in the drying zone (7) or at the inlet (1) and outlet (8).

16. Conveyor dishwasher according to Claim 15, **characterized in that** the regulation of the manipulated-variable position (34, 35) of the exit nozzles (26) of the drying zone (7) and/or the capacity of the drive of the fan (12) are/is regulated in dependence on wash ware (10) which is present in the drying zone (7), on the moisture content of the hot air which is circulating in the drying zone (7) and/or on the temperature prevailing in the drying zone (7).

## Revendications

1. Lave-vaisselle à passage avec au moins une zone de lavage (3, 4), au moins une zone de rinçage (5, 6), une zone de séchage (7), un point d'aspiration (23) pour un courant d'évacuation d'air (24) et un dispositif de transport (21) pour le transport de la vaisselle à laver (10) dans le sens de transport (9) à travers le lave-vaisselle à passage, **caractérisé en ce que** le courant d'évacuation d'air (24) en sens inverse du sens de transport (9) de la vaisselle à laver (10) à travers le lave-vaisselle à passage est produit par l'alimentation d'un flux régulé à partir des buses (26) pour le soufflage d'air chaud dans la zone de séchage (7) et/ou à partir des buses de la zone de lavage (3, 4).

2. Lave-vaisselle à passage selon la revendication 1, **caractérisé en ce que** le point d'aspiration (23) pour l'aspiration du courant d'évacuation d'air (24) est disposé dans la zone d'une admission (1) du lave-vaisselle.

3. Lave-vaisselle à passage selon la revendication 1, **caractérisé en ce qu'**un ventilateur de séchage (19), auquel sont associées les buses de sortie de l'air chaud (26) conçues de manière pivotante, est disposé dans la zone de séchage (7).

4. Lave-vaisselle à passage selon la revendication 3, **caractérisé en ce que** les volumes d'évacuation d'air (28, 33) sortant de la zone de séchage (7) dépendent de la position (34, 35) des buses de sortie (26).

5. Lave-vaisselle à passage selon la revendication 4, **caractérisé en ce que**, dans la première position (34) des buses de sortie (26) disposées de manière pivotante à l'intérieur de la zone de séchage (7), le lave-vaisselle peut fonctionner sans vapeur au niveau de l'admission (1) et de la décharge (22).

6. Lave-vaisselle à passage selon la revendication 4, **caractérisé en ce qu'**une deuxième quantité d'air (33) pouvant être évacuée hors de la zone de séchage (7) peut varier en fonction de la position de pivotement (29, 35) des buses de sortie (26) du ventilateur de séchage (19).

7. Lave-vaisselle à passage selon la revendication 3, **caractérisé en ce qu'**une surface déflectrice (41) est positionnée dans la région de la zone de séchage (7) en dessous des buses de sortie (26).

8. Lave-vaisselle à passage selon la revendication 7, **caractérisé en ce que** la surface déflectrice (41) est conçue sensiblement horizontalement et s'étend en dessous du dispositif (21) pour le transport de la vaisselle à laver (10).

9. Lave-vaisselle à passage selon la revendication 1, **caractérisé en ce qu'**un rideau de séparation (13) est associé à la zone de séchage (7), du côté de l'évacuation vu dans le sens de transport (9) de la vaisselle à laver (10), lequel rideau délimite une ouverture d'aspiration (39) à travers laquelle un courant d'air extérieur (31) peut être aspiré dans la zone de séchage (7).

10. Lave-vaisselle à passage selon la revendication 1, **caractérisé en ce que** la puissance d'un ventilateur (12) du dispositif de récupération de chaleur (11) dépend d'une quantité d'air (28, 33) à évacuer hors de la zone de séchage (7).

11. Lave-vaisselle à passage selon la revendication 1, **caractérisé en ce que** le courant d'évacuation d'air (24) aspiré par le point d'aspiration (23) correspond aux courants d'air extérieurs (31, 32) aspirés à travers les ouvertures d'aspiration (39, 40).

12. Lave-vaisselle à passage selon la revendication 4, **caractérisé en ce que** les buses de sortie (26) à l'intérieur de la zone de séchage (7) peuvent être ajustées par un moteur électrique, par un moyen pneumatique ou hydraulique ou mécanique à l'aide d'un levier.

13. Lave-vaisselle à passage selon la revendication 1, **caractérisé en ce que** les buses de sortie (26) de la zone de séchage (7) peuvent être ajustées dans le sens de pivotement pendant le fonctionnement du lave-vaisselle à passage.

14. Lave-vaisselle à passage selon la revendication 1, **caractérisé en ce que** le courant d'évacuation d'air (24) est régulé à l'aide d'un ventilateur (12) à régulation de vitesse associé au dispositif de récupération de chaleur (11).

15. Lave-vaisselle à passage selon l'une quelconque ou plusieurs des revendications précédentes, **caractérisé en ce que** la position (34, 35) des buses de sortie (26) de la zone de séchage (7) et/ou la puissance du ventilateur (12) du dispositif de récupération de chaleur (11) sont régulées en fonction d'états de fonctionnement du lave-vaisselle et/ou de paramètres de processus température, taux d'humidité dans la zone de séchage (7) ou à l'admission (1) et la décharge (8).

16. Lave-vaisselle à passage selon la revendication 15, **caractérisé en ce que** la régulation de la position des grandeurs de réglage (34, 35) des buses de sortie (26) de la zone de séchage (7) et/ou la puissance de l'entraînement du ventilateur (12) sont régulées en fonction de la vaisselle à laver (10) présente dans la zone de séchage (7), du taux d'humidité de l'air chaud circulant dans la zone de séchage (7) et/ou de la température régnant dans la zone de séchage (7).
